# EUROPÄISCHE PATENTSCHRIFT

(11) **EP 2 758 965 B1**
(45) Veröffentlichungstag und Bekanntmachung des Hinweises auf die Patenterteilung: **05.07.2017**
(21) Anmeldenummer: 12787633.2
(22) Anmeldetag: 21.09.2012
(51) Int. Cl.: G21C 1/02, G21C 1/22, G21C 3/44, G21C 3/54, G21C 15/02, G21C 15/28, G21C 19/307, G21D 5/08, G21C 1/32, G21C 15/24, G21C 15/247

(54) **DUAL FLUID REAKTOR**
DUAL FLUID REACTOR
RÉACTEUR À FLUIDE DOUBLE

(30) Priorität: 21.09.2011 DE 102011114342; 17.04.2012 DE 102012007933
(43) Veröffentlichungstag der Anmeldung: 30.07.2014
(73) Patentinhaber: Huke, Armin, 13469 Berlin (DE)
(72) Erfinder: HUKE, Armin, 13469 Berlin (DE); RUPRECHT, Götz, 14050 Berlin (DE); HUSSEIN, Ahmed, Vancouver V6P 3S6 (CA); CZERSKI, Konrad, 10719 Berlin (DE); GOTTLIEB, Stefan, 58313 Herdecke (DE)
(74) Vertreter: Baumbach, Friedrich
(86) Internationale Anmeldenummer: PCT/DE2012/000957
(87) Internationale Veröffentlichungsnummer: WO 2013/041085

(56) Entgegenhaltungen:
- DE-A1- 1 807 986
- JP-A- 2001 133 572
- US-A- 3 251 745

## Beschreibung

Die Erfindung betrifft einen nuklearen Reaktor mit einem Kreislauf flüssigen Brennstoffs.

### Stand der Technik

Praktisch alle heutigen kommerziellen Reaktoren arbeiten thermisch, wassergekühlt, wassermoderiert und mit festen Brennelementen. Sie haben einen Abbrand von kaum 1% des Natururans und benötigen Anreicherungs- sowie externe Aufbereitungsprozesse. Auch die Konzepte der Generation IV verwenden Brennelemente und benötigen daher weiterhin eine Brennstoffkreislaufindustrie. Die einzige Ausnahme stellt der Flüssigsalzreaktor (*Molten-Salt Reactor*, MSR) dar, bei dem der Brennstoff in flüssiger Form zirkuliert und in Intervallen aufbereitet wird. Ein solcher Reaktor ist z.B. aus der Patentschrift JP 2001 133572 A bekannt. Der Flüssigbrennstoff wird beim MSR gleichzeitig als Kühlmittel eingesetzt, was prinzipiell folgende Vorteile bietet.
A. Vorteile eines flüssigen zirkulierenden Kernbrennstoffs Flüssigsalz oder jede andere Form flüssigen Kernbrennstoffs bietet die Möglichkeit einer kontinuierlichen Echtzeit-Aufbereitung direkt am Reaktorkern, was die Stillstandszeiten erheblich reduziert. Radioaktive Spaltprodukte können kontinuierlich abgezogen werden, wodurch Restzerfallswärmeunfälle ausgeschlossen sind. Auch ein Kernschmelzeunfall ist ausgeschlossen, da der Kern bereits in geschmolzenem Zustand vorliegt. Überdies kann im Falle einer Überhitzung oder für Wartungszwecke der Kern durch eine passive Schmelzsicherung abgelassen werden. Für eine hohe Leistungsdichte und eine effektive Aufbereitung sollte die Temperatur des Flüssigbrennstoffs möglichst hoch sein.
B. Vorteile einer Kühlung mit hohem Siedepunkt Flüssigsalz oder jede andere Form flüssigen Kühlmittels mit einem hohen Siedepunkt ermöglicht den Betrieb bei Normaldruck im Reaktorkern. Dies wiederum ermöglicht ein kompaktes Design; ein teures Reaktordruckgefäß entfällt. Das Konzept hoher Siedepunkte ist auch in den Generation-IV- Konzepten des bleigekühlten schnellen Reaktors LFR (*lead cooled fast reactor*) und des natriumgekühlten schnellen Reaktors SFR (*sodium cooled fast reactor*) umgesetzt.

Die gleichzeitige Verwendung des Flüssigbrennstoffs als Kühlmittel hat zwar einige Vorteile sowohl von (A) als auch von (B), kann diese aber nicht voll ausschöpfen. Z.B. gibt es keine Materialien, die beide Bedingungen gleichzeitig optimal erfüllen. Das zirkulierende Material ist im Wesentlichen beschränkt auf Flüssigsalz, welches einen Kompromiss zwischen hoher Brennstofftemperatur, guter Kühlung und brauchbarer Wärmekapazität darstellt. Das Ergebnis ist der MSR. Dieser lässt sich weder in der thermischen noch in der kürzlich vorgeschlagenen Variante mit schnellem Neutronenspektrum bei Temperaturen betreiben, die hoch genug für Prozesschemie z.B. für Wasserstoffherstellung oder einen hohen elektrischen Wirkungsgrad sind.

Für die Aufbereitung des Brennstoffs existieren folgende Konzepte.
C. Offsite-Aufbereitung
   Die üblichen nasschemischen Verfahrenstechniken wie PUREX und abgeleitete sind offsite. Sie haben folgende Eigenschaften.
   - Sie erfordern eine Zwischenlagerung von mehreren Jahren, andernfalls werden die teuren organischen Lösungen zu schnell durch Radiolyse zerstört.
   - Die Trennungsgenauigkeit für mehrere Elemente ist gering.
   - Die Reaktionen verlaufen bei Normaltemperatur langsam.
   - Es entstehen große Mengen verbrauchter Hilfschemikalien mit mittlerer und niedriger Radioaktivität, die entsorgt werden müssen.
   Aus diesen Gründen eignen sich diese Verfahren nicht für eine Online-Aufbereitung.
D. Onsite-Aufbereitung
   Der integrale schnelle Reaktor (IFR) benutzte elektrolytische Verfahren für das Entfernen eines Teils der Spaltprodukte aus dem Kernbrennstoff ohne Elementetrennung, ausreichend für ein Wiedererlangen der Kritikalität der metallischen Brennelemente in einem schnellen Reaktor. Dieses Verfahren wird zwar auf dem Reaktorgelände, nicht aber online durchgeführt.
E. Online-Aufbereitung
   Die Aufbereitung des MSR wie es das Generation-IV-Konzept vorsieht ist tatsächlich nur im Batch-Betrieb möglich. Dafür muss der Reaktor heruntergefahren und der Brennstoff in ein Aufbereitungssystem verzweigt werden. Eine kontinuierliche Aufbereitung lässt sich mit der gleichzeitigen Kühlfunktion nicht vereinbaren. Um die Ausfallzeit gering zu halten benötigt das Aufbereitungssystem überdies eine hohe Kapazität. Dennoch sind derartige pyrochemische Aufbereitungsanlagen vergleichsweise klein. Die Hauptkomponente ist eine Destillationsanlage für verdampftes Fluorsalz, wo die Metallsalze nach ihren Siedepunkten getrennt werden. Diese sind bei vielen Fluoriden allerdings sehr hoch, so dass eine zusätzliche Fluorierung notwendig ist, nach der aber immer noch Fluoride als Schlamm verbleiben, die weiter behandelt werden müssen.
   Dennoch ist eine Aufbereitung im Batch-Betrieb grundsätzlich mit einer kontinuierlichen Brennstoffzirkulation vereinbar, wenn sich kleinere Puffer vor und/oder hinter dem Aufbereitungssystem befinden, die etwas Brennstoff speichern, während ein anderer Teil gerade aufbereitet wird.

Keines der Generation-IV-Konzepte sieht eine wirkliche Online-Aufbereitung ohne Unterbrechung des Reaktorbetriebs vor, so dass nie alle unter (A) erwähnten Vorteile ausgeschöpft werden können.

Je weiter man sich von einer Online-Aufarbeitung wegbewegt, desto höher sind auch die benötigten Reaktivitätsreserven, die für einen stabilen Langzeitbetrieb nötig sind. Weiterhin müssen, um die Neutronenökonomie konstant zu halten, Absorber (brennbare Neutronengifte) im frischen Brennstoff beigefügt werden, die diese aber auch beträchtlich verschlechtern. Dies wird gerade bei beschleunigergetriebenen unterkritischen Systemen (ADS) von Bedeutung. Je höher die Reaktivitätsreserven, desto größer muss der Beschleuniger sein, um die fehlenden Neutronen zu produzieren. Aus diesem Grunde findet man auch kein ADS-System mit einem kleinen Beschleuniger.

Verbunden mit der höheren Leistungsdichte ergeben sich auch bei der Übertragung der Wärme auf ein Arbeitsgas im konventionellen Teil neue Probleme. Bei herkömmlichen Kernkraftwerken werden im Dampfturbinenkreis indirekte Wärmetauscher verwendet, zumeist in Form von Dampfgeneratoren, worin das Primärkühlmittel seinen Wärmeinhalt abgibt. Das gleiche gilt für Generation-IV-Kraftwerke, die superkritisches Kohlendioxid als Sekundärkühlmittel einsetzten. Das Problem ist, dass Wärmetauscher von Kernreaktoren generell einen großen Raum einnehmen. Während Wärmetauscher bei herkömmlichen Druckwasserreaktoren noch etwa die Größe des Reaktors haben, wären für Hochleistungsreaktoren etwa zehnfach größere indirekte Wärmetauscher notwendig. Damit wären hohe Herstellungskosten verbunden, was die hohe Wirtschaftlichkeit eines entsprechenden Reaktors reduzieren würde.

Die Hauptaufgabe besteht also darin, einen auf Flüssigbrennstoff basierenden nuklearen Reaktor zu finden, der derartig gekühlt wird, dass sich die in (A) und (B) erwähnten Vorteile voll ausschöpfen lassen. Eine weitere Aufgabe ist es, eine echte wie in (D) erwähnte Online-Aufbereitung ohne Unterbrechung des Reaktorbetriebs zu ermöglichen. Eine dritte Aufgabe besteht darin, einen ADS-Betrieb mit einer kompakten externen Neutronenquelle zu ermöglichen. Desweiteren ist eine hohe Temperatur zur Ermöglichung der Prozesschemie und für einen höheren elektrischen Wirkungsgrad wünschenswert. Eine weitere Aufgabe besteht darin, den Wärmeaustausch zu optimieren, um die Herstellungskosten zu minimieren.

### Lösung durch zwei Kreisläufe

Das im Folgenden offenbarte Konzept löst diese Aufgaben dadurch, dass sich Brennstoff und Kühlmittel in getrennten Kreisläufen befinden. Ein solcher Reaktor ist z.B. aus der Patentschrift US 3 251 745 A bekannt. Dieses Konzept wird im Folgenden mit "Dual Fluid Reaktor" oder abgekürzt mit DFR bezeichnet. Der DFR kann mit einer chemischen Aufbereitungsanlage betrieben werden, welche bei hoher Temperatur online im Brennstoffkreislauf arbeitet. Der DFR kann auch unterkritisch mit einem kompakten Beschleuniger betrieben werden.

Die Abtrennung der Kühlfunktion vom Brennstoff entbindet den Reaktor von den o.a. Einschränkungen. Es können nun sämtliche Vorteile eines Hochtemperaturbrennstoffs (A) und eines Kühlmittels mit hohem Siedepunkt (B) ausgeschöpft werden. Da es für das Kühlmittel keine Materialeinschränkungen mehr gibt, die sich aus der Brennstofffunktion ergeben, kann eine Metallkühlung verwendet werden, so dass der DFR mit hoher Leistungsdichte bei hohen
Temperaturen betrieben werden kann. Dies öffnet neue hocheffektive Möglichkeiten für eine echte Online-Aufarbeitung ohne Ausfallzeiten für den Reaktor. Wie bei jedem anderen Hochtemperaturreaktor kann auch Elektrizität mit höherem Wirkungsgrad erzeugt und die Prozesswärme effektiv genutzt werden, z.B. für Wasserstoffproduktion. Die hohe Ladungsträgerdichte von Flüssigmetallkühlmitteln ermöglicht die effektive Nutzung magnetohydrodynamischer Generatoren zur Elektrizitätserzeugung, entweder direkt im Primärkreislauf oder in einem Sekundärkreislauf. Magnetohydrodynamische Pumpen können zur Kühlmittelumwälzung auch zum Einsatz kommen.

Die Umlaufgeschwindigkeit des Flüssigbrennstoffs kann nun an beliebige nukleare Zwecke angepasst werden, z.B. für maximalen Abbrand, Verbrennung von Transuranen, (medizinische) Isotopenproduktion, Brüten von spaltbarem Material oder spezielle Deaktivierung von Spaltprodukten (Transmutation).

Der Betrieb des DFR mit einer Flüssigmetallkühlung hat ein schnelles (hartes)Neutronenspektrum zur Folge, welches in niedrigen Wirkungsquerschnitten für alle neutroneninduzierten Kernreaktionen resultiert. Dies erfordert einen kompakten Aufbau mit konzentriertem (unverdünntem) Brennstoff, was wiederum eine hohe Leistungsdichte verursacht. Sowohl Flüssigsalz-Brennstoff als auch gerade Flüssigmetall-Kühlmittel haben gute Wärmetransporteigenschaften, wodurch sie sich für die Anwendung in einem Reaktorkern mit hoher Leistungsdichte besonders gut eignen. Das Material, das die zwei Flüssigkeiten trennt, muss eine ausreichende Wärmeleitfähigkeit haben und überdies korrosionsbeständig gegenüber dem Flüssigsalz und dem Flüssigmetall sein. Verglichen mit den Bedingungen in thermischen Reaktoren öffnet sich eine weite Auswahl an Isotopen für das Strukturmaterial der Wände, da die Einfangquerschnitte für schnelle Neutronen niedrig sind. Geeignete Materialien wurden bereits vor Jahrzehnten entwickelt, auch wenn sie seltene und mithin teure Elemente enthalten. Im Gegensatz zu festen Brennelementen, die regelmäßig ausgetauscht werden, bleibt das Wandmaterial aber dauerhaft im DFR, so dass selbst seltene Edelmetalle als Legierungszutaten verwendet werden können, ohne die Kosten der Anlage wesentlich zu beeinflussen.

Der DFR darf nicht mit dem "Two Fluid Reactor" verwechselt werden, der während des Flüssigsalzreaktorexperiments MSRE am Oak-Ridge National Laboratory erwogen wurde. Dort wurde neben dem Kreislauf des verdünnten 233U-Salzes eine weitere Rohrführung innerhalb des Reaktorkerns zum Thoriumbrüten in Betracht gezogen, um das Problem ähnlicher Siedepunkte von Thoriumsalzen und Lanthanidsalzen, die bei der Kernspaltung produziert werden, zu umgehen. Dies wurde aber nicht umgesetzt, da damals kein für ein thermisches Neutronenspektrum geeignetes Rohrmaterial gefunden wurde.

### Echte Online-Aufarbeitung des DFR

Die gegenwärtige Erfindung ermöglicht die Anwendung verbesserter Methoden zur trockenen Hochtemperatur-Aufarbeitung, die hier mit dem Brennstoffkreislauf besonders effektiv kombiniert werden können. Dafür kommen grundsätzlich alle Trennverfahren der chemischen Verfahrenstechnik in Frage, insbesondere die Trennung aufgrund thermischer Eigenschaften (Destillation, Rektifikation), aufgrund von Dichteunterschieden (Zentrifugation) und aufgrund des chemischen Aufbaus und der elektrischen Beweglichkeit (Elektroraffination).

Wegen seines ionischen Bindungscharakters ist der abgebrannte Brennstoff unempfindlich gegenüber Radiolyse und als solcher direkt für physikochemische Trennverfahren bei hohen Temperaturen geeignet. Zwei derartige Methoden haben sich in der Vergangenheit bewährt: Die Flüssigsalzelektrolyse-Methode des IFR (siehe D) und die Hochtemperaturdestillation des MSR (siehe E). Beide können im DFR eingesetzt werden. Wegen der kontinuierlichen Online-Aufarbeitung braucht eine solche pyrochemische Anlage im DFR sogar nur für eine kleinere Kapazität ausgelegt zu werden. In einer einfachen Version kann Elektrolyse angewendet werden, um das Brennstoffsalz durch die Abscheidung einer Spaltprodukt-Mischung zu reinigen. Für spezielle Transmutations-Anwendungen sind genauere Trennverfahren erforderlich, die durch fraktionierte Destillation / Rektifikation erreicht werden können, was über die MSR-Methode hinausgeht.

Fluoride haben immer noch eine beträchtliche Moderatorqualität, wodurch das Neutronenspektrum weicher und die Neutronenökonomie verschlechtert wird. Diese Eigenschaft und die hohen Siedepunkte vieler beteiligter Metallsalze machen Fluoride ungeeignet. Höhere Halogene sind in Bezug auf beide Eigenschaften besser geeignet. Für die Metalle in der Mischung des abgebrannten Brennstoffs haben Chloride ausreichend niedrige Siedepunkte, so dass eine Trennung ausschließlich aufgrund unterschiedlicher Siedepunkte durch fraktionierte Destillation möglich wird.

### Dual Fluid ADS-System

Die echte Online-Aufarbeitung macht den DFR zu einem hervorragenden Kandidaten eines beschleunigergetriebenen unterkritischen Systems (ADS). Neutronengifte werden ständig abgeführt, so dass der Reaktor bis auf 0,1% unterhalb der Kritikalität gefahren werden kann. Ein kleiner Ionenbeschleuniger, der seinen Strahl auf ein Target im Reaktorkern gerichtet hat, kann dort eine ausreichend hohe Neutronenrate erzeugen, um das System in den kritischen Zustand zu bringen. Auf diese Art kann der DFR vollständig vom Beschleuniger gesteuert werden, mit der Möglichkeit einer Schnellabschaltung.

### Direktkontaktwärmetauscher

Bei der Wärmeauskopplung eines Reaktors mit hoher Leistungsdichte und hoher Betriebstemperatur ergibt sich die besondere Problematik, dass die Betriebstemperatur zwar so hoch ist, dass sich einerseits der Einsatz von Gasturbinen lohnt, jedoch die Verwendung einer Dampfturbine selbst mit superkritischem Wasser Leistungspotential verschwenden würde. Zudem hat der Dual Fluid Reaktor (DFR) eine so hohe Leistungsdichte, dass Flüssigmetall als Primärkühlmittel die höchste Wärmetransportfähigkeit besitzt, während das Medium Gas im Turbinenkreis die geringste besitzt. Dies hätte zur Folge, dass ein indirekter Wärmetauscher ein Volumen hätte, welches eine Größenordnung größer ist als das Volumen des Reaktorkerns, wodurch die Kosten des Wärmetauschers zu einem dominierenden Anteil der Baukosten würden. Um die Herstellungskosten deutlich zu senken, ist es deshalb vorteilhaft, einen Direktkontaktwärmetauscher zu verwenden. Direktkontaktwärmetauscher werden bisher vorwiegend in der Klimatechnik und bei Naßkühltürmen verwendet. Unter direktem Kontakt ist dabei zu verstehen, dass zwischen dem ersten und dem zweiten Wärmeträger keine Wandung existiert. Dabei wird überwiegend die Wärme zwischen Wassertropfen und Luft übertragen, wobei sich die Luft im Wesentlichen nahe dem Normalzustand befindet.

### Funktionsweise des Direktkontaktwärmetauschers

In dem Direktkontaktwärmetauscher wird einem Hochdruckgasstrom aus dem Turbokompressor das Flüssigmetallkühlmittel in einer Intermixkammer als zerstäubte Tröpfchen injiziert, so dass über die sich ergebende große Direktkontaktfläche das Gas in einem kleinen Volumen erhitzt wird. Vor der Turbine befindet sich ein Separator zur Abscheidung des Flüssigmetalls aus dem Hochdruckgasstrom mittels des Fliehkraftprinzips.

Die Verwendung eines Direktkontaktwärmetauschers in einem Dual Fluid Reaktor (DFR) ist vorteilhaft, da sie eine beträchtliche Erhöhung der Wirtschaftlichkeit des Reaktors bewirkt. Mit dieser Zielstellung kann der beschriebene Direktkontaktwärmetauscher auch in anderen Reaktortypen der Generation IV eingesetzt werden. Eine Verwendung in einem LFR wäre vorteilhaft, wenn prinzipiell eine Erhöhung der Betriebstemperatur erreicht würde. Beim gegenwärtigen Stand der Technik sind LFR in ihrer Betriebstemperatur noch auf unter 700 °C begrenzt, da aus Kostengründen Stahl als Strukturmaterial und für die Brennelemente eingesetzt werden muss. Auch eine Verwendung in VHTR (*very high temperature reactor*) ist möglich, wenn diese eine Salzschmelze als Kühlmittel verwenden. Auch hier wäre der Einsatz denkbar. Natriumgekühlte Reaktoren (SFR) arbeiten jedoch aufgrund des niedrigen Siedepunkts von Natrium bei so niedrigen Temperaturen, dass der Einsatz einer Gasturbine nicht sinnvoll ist.

### Ausführungsbeispiel

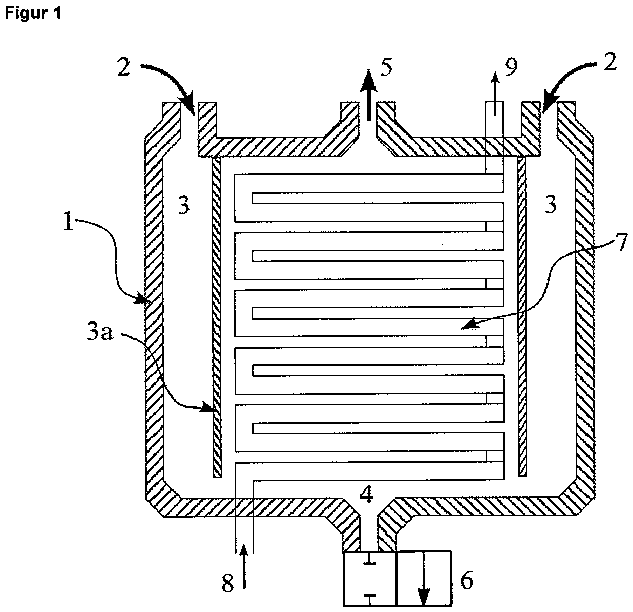

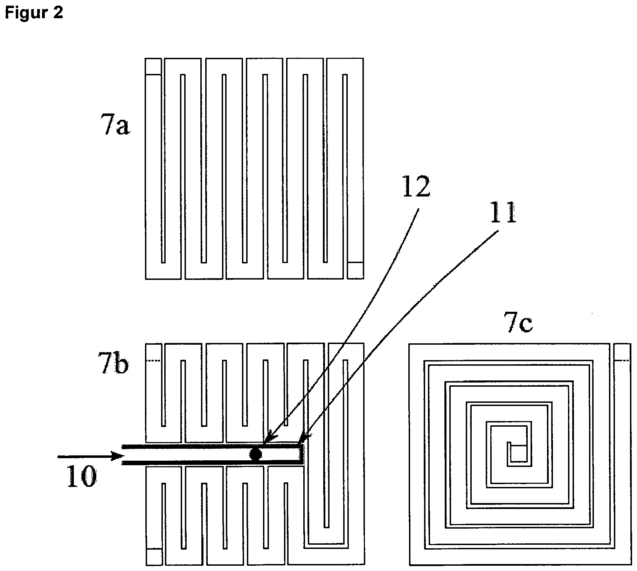

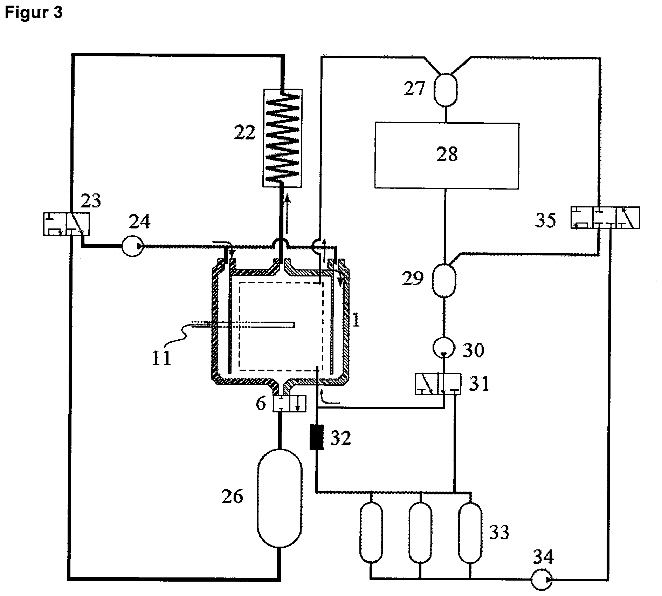

Figur 1 zeigt schematisch die bevorzugte Umsetzung des Reaktorkerns, Figur 2 verschiedene Formen der Brennstoffleitung und Figur 3 das Gesamtsystem mit Kühl- und Brennstoffkreisläufen.

### Reaktorkern

Der in Figur 1 gezeigte Reaktorkern besteht aus dem mit Kühlmittel gefüllten Reaktorkerngefäß (1) und der Brennstoffleitung (7), durch die der Flüssigbrennstoff gepumpt wird. Die Brennstoffleitung (7) ist derartig geformt, dass das Kernvolumen (4) möglichst kompakt gefüllt wird, aber gleichzeitig das Kühlmittel noch ausreichend und gleichmäßig Wärme von ihr aufnehmen kann.

Die Draufsicht einer Ebene der Brennstoffleitung (7) in verschiedenen möglichen Ausführungen sieht man in Figur 2. Am einfachsten herzustellen wäre eine Leitung wie in (7a) gezeigt. Für ein ADS-System hat die mittlere Ebene eine andere Form (7b), um einen Teilchenstrahl (10) von einem externen Beschleuniger durch die Strahlführung (11) in das Zentrum des Reaktorkerns auf ein neutronenproduzierendes Target (12) lenken zu können. Auch ohne externen Beschleuniger arbeitende Neutronenquellen können anstelle des Targets (12) angebracht werden. Die Brennstoffleitung kann auch, wie in (7c) angedeutet, spiralförmig sein, was eine zylindrische Bauform des Gefäßes ermöglicht.

In dieser bevorzugten Ausführung wird flüssiges Blei als Kühlmittel verwendet, das bei einer Temperatur von 1000 °C und bei Normaldruck zirkuliert. Das vom

Wärmetauscher (22) kommende einlaufende Blei hat eine niedrigere Temperatur. Aus diesem Grunde ist das Kernvolumen (4) mit einer gut wärmeleitenden Trennwand (3a) umgeben. Zwischen dieser Trennwand (3a) und der Außenwand des Reaktorkerngefäßes (1) entsteht ein zusätzliches Volumen, das Reflektorvolumen (3). Das an den Punkten (2) einfließende "kalte" Blei läuft im Reflektorvolumen (3) zunächst nach unten, wo es sich durch Wärmeleitung an der Trennwand (3a) aufwärmt. Dort dient es auch als Reflektor für Neutronen um den Neutronenverlust zu verkleinern. Unten bewegt es sich nun vorgewärmt in das Kernvolumen (4). Während es sich dort nach oben bewegt nimmt es Wärme von den Wänden der Brennstoffleitung (7) auf und verlässt bei höherer Temperatur das Reaktorkerngefäß am oberen Ende (5).

In dieser bevorzugten Ausführung wird flüssiges Salz als Brennstoff verwendet, das bei einer Temperatur von 1000 °C und bei Normaldruck zirkuliert. Der Flüssigbrennstoff läuft durch die Leitung direkt von unten (8) in das Kernvolumen (4). Der hohe Neutronenfluss im Kernvolumen löst eine entsprechende Zahl an nuklearen Spaltprozessen der im Brennstoff befindlichen Aktinide aus. Die Spaltungsenergie heizt den Brennstoff auf, der seine Wärme über die Rohrwände auf das Kühlmittel überträgt. Bei den nuklearen Spaltprozessen werden weitere schnelle Neutronen in ausreichend hoher Rate freigesetzt, innerhalb des Kernvolumens eine nukleare Kettenreaktion in Gang zu halten. Während sich der Flüssigbrennstoff langsam durch die lange Leitung bewegt, werden mehr und mehr Aktinide gespalten, so dass er beim Verlassen des Kernvolumens (4) am oberen Ausgang (9) mit einer veränderten chemischen Zusammensetzung zur pyrochemischen Verarbeitungseinheit (pyrochemical processing unit, PPU) (28) geleitet wird.

### Kühl- und Brennstoffkreislauf

Figur 3 zeigt den äußeren Aufbau, den Kühl- und Brennstoffkreislauf.

Im Kernreaktor umfasst eine erste Leitung, die auch als Brennstoffleitung oder Brennstoffkreislauf bezeichnet wird, zwei Pumpen (30, 34), eine pyrochemische Verarbeitungseinheit (28), ein Vorpuffervolumen (27), ein Nachpuffervolumen (29), eine gekühlte Schmelzsicherung (32), drei unterkritische Speichertanks für den flüssigen Kernbrennstoff (33) und zwei Mehrwegeventile (31, 35), wobei besagte erste Leitung über einen Eingang (8) in das Reaktorkerngefäß (1) eintritt, in einer Kernbrennstoffleitung (7) durch das Kernvolumen (4) geführt wird und über den Ausgang (9) das Reaktorkerngefäß wieder verlässt. Eine zweite Leitung, die auch als Kühlmittelleitung oder Kühlkreislauf bezeichnet wird, umfasst eine Pumpe (24), ein Mehrwegeventil (23), einen temporären Kühlmittelspeicher (26) und einen Wärmeaustauscher (22), wobei besagte zweite Leitung über mindestens einen Einlass (2) in das Reaktorkerngefäß (1) eintritt, zwischen einer wärmeleitenden Trennwand (3a) und der Außenwand des Reaktorkerngefäßes (1) durch das Reflektorvolumen (3) und weiter durch das Kernvolumen (4) die Kernbrennstoffleitung umspülend (7) geführt wird und über den Ausgang (5) das Reaktorkerngefäß (1) wieder verlässt.

Nachdem das aufgeheizte Flüssigblei den Reaktor verlassen hat bewegt es sich in den Wärmetauscher (22). Abhängig vom Energiebedarf wird dort ein Teil der Wärme zur Elektrizitätserzeugung oder als Prozesswärme entnommen. Das Blei verlässt den Wärmetauscher bei einer niedrigeren Temperatur und wird nach dem Durchlaufen des Mehrwegeventils (23) wieder zurück in den Reaktorkern gepumpt (24). Für Wartungszwecke kann das Flüssigblei auch am unteren Ende des Reaktorgefäßes über ein Ventil (6) in einen temporären Kühlmittelspeicher (26) abgelassen werden, von wo es über den unteren Eingang des Mehrwegeventils (23) wieder zurück in das Reaktorgefäß gepumpt werden kann.

Als Wärmetauscher (22) wird in einer bevorzugten Ausführungsform der Erfindung ein Direktkontaktwärmetauscher verwendet. Dabei nimmt der Direktkontaktwärmetauscher in einer Gasturbine die Stelle der Brennkammer ein, wobei die Wärmeübertragung mittels Zerstäubung des flüssigen Kühlmittels, vorzugsweise eines flüssigen Metalls und besonders bevorzugt Blei, in den Gasstrom aus dem Turbokompressor in einer strömungsdynamisch geformten Kammer erfolgt, und nachfolgend die Tropfen in einem angeschlossenen Fliehkraftseparator abgeschieden werden, bevor das erhitzte Gas in die Turbine eintritt.

In einer bevorzugten Ausführungsform wird die Geschwindigkeit des aus dem Reaktor kommenden Flüssigmetallstroms in einem Becken verzögert und somit an die Arbeitsgeschwindigkeiten der Einspritzpumpen zur gleichmäßigen Beförderung in die Intermixkammer angepasst. Die Intermixkammer besteht aus einer Anordnung von Düsen, die das durch die Einspritzpumpen unter hohem Druck stehende Flüssigmetall zu einem Sprühregen aus Tropfen der erforderlichen Größe in den Hochdruckgasstrom zerstäuben. Für den Teillastbetrieb können regelmäßige Unteranordnungen der Düsen abgeschaltet werden, und die Tröpfchengröße über variable konische Dornen in den Düsen verändert werden. So ist es möglich, bei verringertem Gasfluss die Abscheideeffizienz des Fliehkraftseparators zu erhalten, da die Tröpfchenmasse auch vergrößert ist. Die Intermixkammer ist in der Querschnittsform kongruent und nahe dem Einlauf des nachfolgenden Separators. Das Flüssigmetall kann auch, insbesondere im Fall von Blei, als Schmiermittel in der Einspritzpumpe dienen. Blei ist ein bevorzugtes Kühlmittel gemäß der Erfindung.

An die Intermixkammer schließt sich ein Separator an, wo das erhitzte Gas von dem Metalltropfen getrennt wird. Da das Gas bei hohem Druck sich mit großer Strömungsgeschwindigkeit bewegt, bieten sich hierbei auf dem Fliehkraftprinzip basierende Separatoren, wie Zyklonabscheider oder Vortexrohre an. Um eine hohe Abscheiderate zu erreichen, können diese gestaffelt bzw. als multiple Einheiten ausgeführt werden. Das gereinigte Gas tritt dann über Düsen zur Umwandlung der inneren Energie in Strömungsenergie in die Turbine ein.

Die Staffelung der Zyklonstufen geschieht derart, dass einem Zyklon der vorhergehenden Stufe mit größerem Durchmesser mehrere Zyklone mit kleinem Durchmesser und damit größerer Fliehkraft folgen, so dass der Gasfluss auf eine passende Anzahl kleinerer Zyklone aufgeteilt wird. Auf diese Weise können immer kleinere Tröpfchengrößen separiert werden.

Aus den Zyklonen wird das abgeschiedene Flüssigmetall über Zahnradschleusen, die gleichzeitig dazu dienen, den hohen Druck im Bereich der Gasturbine auf Normaldruck zu transformieren, in einen Sammelbehälter abgezogen. Aus dem Sammelbehälter wird das Flüssigmetall mittels einer Pumpe in den Reaktorkern befördert. Durch die möglich gewordene kompakte Anordnung kann das Sammelbecken direkt an das Entnahmebecken der Einspritzpumpen angrenzen bzw. ein Becken mit einer mechanisch entfernbaren Trennwand gebaut werden, so dass im Notfall (Stromausfall) die Trennwand selbsttätig entfernt werden kann und eine natürliche Konvektion des wiederhergestellten Flüssigmetallkreislaufs erlaubt.

Die zuvor dargestellten Prozesse des Wärmeaustauschs der Tropfen, der Separation und des Abführens des Metalls in den Sammelbehälter würden so auch noch funktionieren, wenn die Tropfen bis unter den Schmelzpunkt des Metalls gekühlt und dann fest würden. Es müsste dann lediglich im Sammelbehälter eine Vorerhitzung, etwa durch Rückerhitzung mittels des heißen Metallstroms, zum Schmelzen der Metallpartikel stattfinden.

Das Gas sollte gegenüber dem Flüssigmetall chemisch hinreichend inert sein, so dass keine stabile chemische Verbindung aus beiden entstehen kann. Für viele Metalle ist dafür Stickstoff als Gas ausreichend. Allerdings arbeiten Gasturbinen nach dem thermodynamischen Joule-Brayton-Zyklus, wo die Verwendung einatomiger Gase den Wirkungsgrad über den Isentropenexponenten signifikant erhöht, da keine inneren Freiheitsgrade der Gasmoleküle Energie absorbieren. Für Hochtemperaturreaktoren wird deshalb bevorzugt Helium verwendet, wobei Helium auch wegen seiner neutronischen Eigenschaften bevorzugt ist. Weiterhin hat Helium eine doppelte so hohe Wärmeleitfähigkeit wie etwa Argon, was die notwendige Wärmeaustauschfläche halbiert. In einem indirekten Wärmetauscher mit den beschriebenen geschilderten großen Abmessungen und dem damit verbundenen Materialverbrauch wäre die Verwendung von Helium damit kostengünstiger als Argon. Für den gemäß der Erfindung verwendeten direkten Wärmetauscher ist dies unbedeutend. Zudem ist Argon gegenüber Helium signifikant billiger. So kann sowohl der Materialbedarf und damit die Baukosten drastisch reduziert werden, als auch das billigere Argon eingesetzt werden, was eine beträchtliche Reduzierung der Gesamtkosten bewirkt. In der vorgeschlagenen Ausführung des DFR mit Blei als Kühlmittel ergibt sich die bevorzugte Kombination Blei und Argon.

Die Abscheidung vor der Turbine ist in der Regel nicht vollständig möglich. Moderne Gasturbinen bestehen bereits aus sehr belastbaren Materialien und sind in der Lage, mit Schwefelsäure und Staubpartikeln zurechtzukommen. Die neueste Entwicklung zur Wirkungsgradsteigerung geht dahin, Kraftwerksturbinen mit direkter Kohlestaubfeuerung zu betreiben, wobei die Turbine große Mengen Asche verkraften muss. Verglichen damit sind Bleitropfen weniger problematisch, zumal die Gastemperatur auch hinter der Turbine noch über der Schmelztemperatur des Bleis liegt. Allerdings würde auch Blei, welches sich auf Schaufeln des Rotors und des Stators absetzt, ein Ungleichgewicht erzeugen, welches bezüglich des Gasflusses zu Schwingungsbewegungen des Schaufelblattes führt, die ein Abschütteln des Bleis bewirken. Dies gilt insbesondere auch für die Seite des Turbokompressors. Die im Gasstrom verbleibenden Bleitropfen würden spätestens im Abwärmetauscher, wo das Arbeitsgas seine Abwärme abgibt, ausfrieren. Da das Blei eine gute Wärmeleitfähigkeit besitzt, würde die Funktion des Abwärmetauschers dadurch kaum beeinträchtigt, bis auf ein allmähliches Zusetzen mit Blei, was regelmäßige Wartung erfordert. Um diese Intervalle zu strecken, ist es vorteilhaft, kurz vor oder in baulicher Kombination mit dem Abwärmetauscher Abscheider zu installieren, die auf den bereits stark verzögerten Gasstrom einwirken, wie Lamellenabscheider, Prallabscheider, Kammerabscheider und Demister.

Der den Reaktorkern verlassende (9) Flüssigbrennstoff wird zunächst im Vorpuffer (27) gesammelt. Von dort wird eine zu verarbeitende Menge in die PPU (28) geleitet. Die dort verarbeiteten Mengen werden im Nachpuffer (29) gesammelt und von dort durch ein Mehrwegeventil (31) und durch den Einlass an der Unterseite des Reaktorkerns (8) zurück in das Kernvolumen (4) gepumpt (30). Die Puffer (27) (29) haben die Aufgabe, temporär unterschiedliche Durchlaufraten im Reaktor und der PPU (28) zu kompensieren; für den gleichen Zweck können auch die unterkritischen Speichertanks (33) in den Kreislauf eingeschlossen werden. Dies wird insbesondere dann vonnöten sein, wenn eine Batch-Technik wie Elektroraffination zur Anwendung kommt. Der Vorpuffer (27) kann auch zur Reinigung des Brennstoffs von Edelgasen verwendet werden.

Im ADS-Betrieb wird die Brennstoffmischung von der PPU (28) knapp unter der Kritikalitätsgrenze gehalten, so dass lediglich ein paar Promille des gesamten Neutronenflusses von einer Beschleunigerneutronenquelle bereitgestellt werden müssen, um den Reaktorkern wieder kritisch werden zu lassen. Auf diese Art ist ein kleiner Beschleuniger anstatt eines Hochenergie-Beschleunigers mit Spallationsquelle ausreichend.

Für Wartungszwecke oder im Notfall ist ein unterkritischer Brennstoffspeicher (33) vorgesehen. Er besteht aus mehreren Tanks, von denen jeder nur die Kapazität einer tief unterkritischen Masse des Flüssigbrennstoffs hat. Die Tanks können entweder durch die offene Schmelzsicherung am Boden des Reaktorgefäßes (32) oder über das Mehrwegeventil (31) vom Nachpuffer (29) durch die Pumpe (30) gefüllt werden.

Die aktiv gekühlte Schmelzsicherung (32), wie sie auch beim MSRE am Oak-Ridge Laboratory zum Einsatz kam, kann auch hier zum regulären Herunterfahren des Systems benutzt werden. Sie ist im Wesentlichen ein Stück Rohr, das mit konstanter Wärmeabfuhr gekühlt wird. Wegen der nicht unwesentlichen Wärmeleitfähigkeit des Flüssigsalzbrennstoffs breitet sich die im Kernvolumen (4) produzierte Wärme auch bis zur Schmelzsicherung (32) aus. Die konstante Wärmeabfuhr ist so eingestellt, dass das Salz dort gerade noch nicht schmilzt, wenn es im Kernvolumen (4) eine Temperatur von 1000 °C hat. Bei höheren Temperaturen oder bei einem Stromausfall wird die durch das Flüssigsalz geleitete Wärme das Salz in der Sicherung zum Schmelzen bringen, so dass sie sich öffnet und der Brennstoff in die subkritischen Tanks (33) abfließt. Von dort kann es über ein weiteres Mehrwegeventil (35) wieder in den Vorpuffer (27) oder in den Nachpuffer (29) gepumpt (34) werden. Der Flüssigsalzbrennstoff ist eine Mischung aus brütbarem und spaltbarem Aktinid-Salz. Dies kann die Kombination 238U/239Pu oder 232Th/233U sein. Für den Uran/Plutonium-Zyklus benötigt der Reaktor eine anfängliche Menge von Plutonium (alternativ kann auch hochangereichertes 235U verwendet werden, falls kein Pu verfügbar ist). Der Plutoniumanteil hängt wegen des unterschiedlichen Neutronenverlustes an der Oberfläche von der Größe des Reaktorkerns ab. Das Maximum ist ein Plutonium-Anteil von 35%, der für den kleinsten nutzbaren Aufbau erforderlich ist, während größere Ausführungen mit einem kleineren Plutoniumanteil auskommen. Der Rest besteht aus 238U-Salz. Als Salz würde man hier Trichloride bevorzugen, d.h. UCI3 und PuCI3, weil sie über einen geeigneten Temperaturbereich flüssig sind. Zur Vermeidung von Neutronenverlusten durch Einfang am häufigsten Isotop 35CI, welches dann das langlebige Radioisotop 36CI erzeugen würde, sollte hier hochreines 37CI verwendet werden.

### Negativer Temperaturkoeffizient

Die PPU (28) fabriziert eine Brennstoffmischung, die im Innern des Reaktors bei der gewünschten Temperatur von 1000 °C kritisch ist. Es gibt hauptsächlich drei Effekte, die für eine negative Rückkoppelung der Kernspaltrate sorgen, indem sie den Neutronenfluss abschwächen, wenn die Temperatur ansteigt:
- Dopplerverbreiterung der Resonanzen in den Neutroneneinfangquerschnitten vergrößert den makroskopischen Einfangquerschnitt.
- Dichteverringerung des Flüssigsalzbrennstoffs verringert die Konzentration an spaltbaren Nukliden.
- Dichteverringerung des Flüssigbleis verringert die Konzentration der neutronenreflektierenden Bleikerne.

Wegen seiner hohen Atommasse und der vielen stabilen Isotope durch den nuklearen Schalenabschluss ist Blei ein hervorragender Neutronenreflektor mit nur geringen Moderatorfähigkeiten und niedrigen Wirkungsquerschnitten für Neutroneneinfang. Diese Effekte zusammen sorgen für einen tief negativen Temperaturkoeffizienten im schnellen Neutronenspektrum. Dies steht ganz im Gegensatz zu eine Kühlung mit flüssigem Natrium, welches einen ungleich höheren Neutroneneinfangquerschnitt hat, stärker moderiert und weniger reflektiert, demzufolge mit steigender Temperatur für einen höheren Neutronenfluss sorgt, d.h. einen positiven Temperaturkoeffizienten hat. Eine weitere Konsequenz ist, dass die nur geringe Aktivierung von Blei eine intermediäre Kühlschleife überflüssig macht, im Gegensatz zur Natriumkühlung.

### Hochfahren des Reaktors

Zum Starten wird das System vorgeheizt bis Brennstoff und Blei flüssig werden. Gleichzeitig wird die Kühlung der Schmelzsicherung (32) eingeschaltet. Von den unterkritischen Speichertanks (33) wird das Brennstoffsalz in das Kernvolumen (4) gepumpt. Etwas Flüssigbrennstoff verzweigt sich über das T-Stück am unteren Ende des Reaktors in die Schmelzsicherung (32), wo es ausfriert und diese verschließt. Im Kernvolumen (4) wird der Brennstoff kritisch.

Ab jetzt wird der Reaktor durch die beschriebenen physikalischen Regelkreise gesteuert. Anfangs ist die Spaltrate und die entsprechende Energieproduktion minimal. Mit dem Einschalten der Kühlmittelpumpe (24) kommt die Bleizirkulation in Gang. Durch die Wärmeabfuhr am Wärmetauscher (22) (dieser muss selbstverständlich in der Lage sein, seinerseits die Wärme abzuführen) sinkt die Temperatur im Reaktorkern. Die Regelkreise lassen den Reaktor überkritisch werden bis die Nominaltemperatur erreicht und ausgeglichen ist. Dieser Vorgang kann fortgesetzt werden, bis die Nominalleistung des Reaktors erreicht ist. Im umgekehrten Falle, wenn sich die Bleizirkulation verlangsamt (auch im Falle einer Fehlfunktion), steigt die Temperatur im Reaktorkern, wodurch er unterkritisch wird und weniger Wärme produziert, bis wieder die Nominaltemperatur erreicht ist. Auf diese Weise folgt die Spaltrate im Reaktor immer der Energieentnahme.

Die Gleichgewichtstemperatur (Nominaltemperatur) wird durch den Anteil an spaltbarem Material (hier Pu-Anteil) im Brennstoffsalz bestimmt. Die PPU (28) sorgt dafür, dass der Brennstoff entsprechend gemischt wird.

### Herunterfahren des Reaktors

Für einen regulären Shutdown wird die Bleizirkulation und die Kühlung der Schmelzsicherung (32) gestoppt, so dass der Flüssigsalzbrennstoff in die unterkritischen Tanks abläuft (33). Das gleiche passiert auch bei einem Stromausfall der gesamten Anlage. Sollte aus irgendeinem Grunde wie Fehlfunktion oder Sabotage von der PPU ein zu hoher Anteil an spaltbarem Material in den Brennstoff gemischt werden, steigt die Nominaltemperatur ebenfalls, so dass wiederum die Schmelzsicherung zum Tragen kommt.

Folgerichtig gibt es keinen Unterschied zwischen einer regulären und einer Notabschaltung.

### Mögliche Unfälle

Die PPU (28) entfernt kontinuierlich Spaltprodukte vom Brennstoffsalz und ersetzt sie durch brütbares Material, z.B. 238U. Die Restzerfallswärme der wenigen im Reaktorkern während eines Umlaufs neu erzeugten Spaltprodukte kann von den unterkritischen Speichertanks (33) leicht passiv abgeführt werden. Kurzum: Für alle bekannten typischen gefährlichen Reaktorunfälle wie Stromausfall, Kühlmittelverlust, Kritikalitätsunfall und Nachzerfallswärmeunfall verhält sich der DFR ordentlich wie bei einem regulären Shutdown.

### Verwendung des Neutronenüberschusses

Bei Verwendung des Uran-Plutonium-Zyklus produziert die Spaltung des Plutoniums einen hohen Neutronenüberschuss. Auch nach der Regenerierung des 239Pu durch Erbrüten aus 238U verbleibt immer noch ein großer Neutronenüberschuss. Wird nur 238U in den Brennstoff beigemischt, so wird dieser Neutronenüberschuss als zusätzliches Plutonium enden. Die Konversionsrate ist größer als Eins - der Reaktor arbeitet im Brütermodus.

Der Neutronenüberschuss kann auch für andere Transmutationsprozesse verwendet werden, z.B. indem langlebige Spaltprodukte von der PPU (28) in den Brennstoff gemischt werden. Denn auch nach der Transmutation der selbst erzeugten langlebigen Spaltprodukte bleibt noch ein beträchtlicher Neutronenüberschuss, der zur Transmutation langlebiger Spaltprodukte aus abgebrannten Brennelementen anderer (heutiger) Reaktoren verwendet werden kann. Nur wenn der Neutronenüberschuss anderweitig verwendet wird arbeitet der Reaktor als Selbstbrenner, d.h. die Konversionsrate ist gleich Eins.

Alternativ kann die PPU (28) Thorium oder inerte Materialien beimischen, um den Neutronenüberschuss auszugleichen.

Die Neutronenausbeute bei Spaltung des 233U im Thorium-Uran-Brennstoffkreislauf ist beträchtlich niedriger als die bei der Spaltung des 239Pu beim Uran-Plutonium-Kreislauf. Es ist möglich, den DFR als Th-U-Brüter mit schnellen Neutronen zu betreiben mit einer Konversionsrate, die knapp über Eins liegt. Die Transmutation der selbstproduzierten langlebigen Spaltprodukte könnte möglich sein. Dafür muss die PPU (28) das 233Pa abscheiden und zwischenlagern, bis es zu 233U zerfallen ist. Die PPU kann den Übergang von einem U-Pu- zu einem Th-U-Kreislauf kontinuierlich ausgestalten.

Dem spaltbaren Material im Brennstoffsalz können auch Transurane von abgebrannten Brennelementen beigemischt werden. Wie im Falle der Transmutation von Spaltprodukten würde die PPU (28) Chloridsalze aus den Pellets der abgebrannten Brennelemente verarbeiten, indem sie die chemischen Elemente nach ihren Siedepunkten trennt. Anschließend mischt die PPU (28) das Brennstoffsalz aus den gewünschten Aktiniden so, dass die Kritikalitätsbedingungen im Reaktorkern erfüllt sind. Auf diese Weise kann Natururan, abgereichertes Uran, sogenannter nuklearer Abfall und Thorium als Quelle des Brennstoffs eingesetzt werden.

### Weitere Ausführungsformen

Gründe für die Wahl von Blei als Kühlmittel sind die geringe Neutronenabsorption bei geringer Moderation, sowie die guten Neutronenreflektions- und thermischen Eigenschaften. Andere Materialien wie z.B. Zinn oder komplexere Legierungen können die Korrosivität auf die Strukturmaterialien verringern, haben aber möglicherweise schlechtere thermische und Neutroneneigenschaften. Hier muss ein Optimum gefunden werden.

Durch die Wahl eines Kühlmittels mit niedrigerer Kernmasse, z.B. Lithium, und einem moderierenden Reflektor wird das Neutronenspektrum weicher und der DFR thermisch bzw. epithermisch. Dadurch lässt sich ein sehr kleiner, leistungsschwächerer DFR bauen, der sich gut für den mobilen Einsatz eignet. Damit verschlechtert sich aber auch die Neutronenökonomie, die Konversionsrate wird kleiner als eins und die Transmutationsfähigkeit geht verloren.

Unter Kreislauf wird auch ein offener Kreislauf verstanden, bei der der Brennstoff nach einmaligem Durchlauf durch den Kernbereich (4) in den unterkritischen Tanks (33) aufgefangen wird. Die Bearbeitung des Brennstoffs könnte dann offline oder offsite erfolgen. Auch diese Variante bietet Vorteile für den mobilen Einsatz, da sie durch den Wegfall der PPU weniger empfindlich auf Erschütterungen reagiert. Im Reflektorvolumen (3), wo das Neutronenspektrum weicher ist, können weitere Leitungen geführt werden, die zur Transmutation, nicht aber zur Spaltung bestimmte Materialien transportieren. Diese können als abgetrennte Produkte von der PPU (28) oder völlig getrennt eingeleitet werden. Die Transmutationsrate für einige Materialien kann durch Resonanzeinfang dort erheblich höher sein als im Kernvolumen (4).

Der Flüssigbrennstoff kann auch in Form einer bei Betriebstemperatur flüssigen Metalllegierung dargestellt werden. Durch die gegenüber einer Salzschmelze wesentlich erhöhten Wärmeleitfähigkeit und geringeren Korrosivität lässt sich sowohl die Leistungsdichte als auch die Betriebstemperatur weiter steigern und damit die Grenzen des DFR-Konzepts ausreizen. Da etliche Actiniden in der Brennstoffmischung zu hohe Schmelztemperaturen haben, ist es notwendig durch Beimischung von geeigneten Metallen mit niedrigem Schmelzpunkt und hinreichend günstigen Neutroneneigenschaften zumindest die Solidustemperatur beträchtlich abzusenken. Die entstehende Multikomponentenlegierung muss nicht notwendigerweise ein Eutektikum sein. Auch wenn die Liquidustemperatur oberhalb der Betriebstemperatur liegt, ist das Gemenge in dieser breiigen Phase hinreichend pumpbar. Geeignete Beimengungsmetalle sind wie bei Weichloten Blei, Wismut und falls nötig auch Zinn, die bis zu etwa 75 mol-% der Brennstofflegierung ausmachen können. Der Preis dieser Vorteile ist ein erhöhter Aufwand bei der Brennstoffverarbeitung in der PPU. Hinzu kämen zwei weitere Verarbeitungsschritte, nämlich die Umwandlung der Metalllegierung in eine Salzschmelze und die Rückwandlung der getrennten Salze in Metalle z.B. mittels Elektrolyse. Wobei pyrochemische Trennverfahren auch schon auf die Brennstofflegierung angewendet werden können und nur der auf diese Weise nicht weiter separierbare Rest in eine Salzschmelze zur weiteren Verarbeitung überführt werden müsste. So können Blei, Wismut und niedrig siedende Spaltprodukte durch Destillation der Metallschmelze abgetrennt werden und nur der zurückbleibende Sumpf muss als Salz weiterverarbeitet werden.

### Beschreibung der Figuren

- **Figur 1:**: Reaktorkern des DFR
- **Figur 2:**: Mögliche Formen der Brennstoffleitung
- **Figur 3:**: Gesamtschema des DFR

### Bezugszeichenliste

- (1): Reaktorgefäß
- (2): Bleieintritt
- (3): Reflektorvolumen
- (3a): Trennwand
- (4): Kernvolumen
- (5): Bleiaustritt
- (6): Bleiablassventil
- (7): Brennstoffleitung
- (7a): Normale Ebene der Brennstoffleitung
- (7b): Strahlebene der Brennstoffleitung
- (7c): Spiralvariante der Brennstoffleitung
- (8): Brennstoffeintritt
- (9): Brennstoffaustritt
- (10): Teilchenstrahl
- (11): Teilchenstrahlführung
- (12): Neutronenproduzierendes Target oder Quelle
- (22): Wärmetauscher
- (23): Bleiventil
- (24): Bleipumpe
- (26): Bleispeichertank
- (27): Brennstoffvorpuffer
- (28): Pyrochemische Verarbeitungseinheit (PPU)
- (29): Brennstoffnachpuffer
- (30): Brennstoffpumpe
- (31): Brennstoffeinlassventil
- (32): Schmelzsicherung
- (33): Unterkritische Brennstofftanks
- (34): Pumpe zur Brennstoffrückführung
- (35): Ventil zur Brennstoffrückführung

## Patentansprüche

1. Kernreaktor, umfassend eine erste Leitung (7) zur kontinuierlichen Zu- und Abführung eines Flüssigbrennstoffs in ein Kernvolumen (4) in einem Reaktorkerngefäß (1), wobei die besagte erste Leitung über einen Eingang (8) in das Reaktorkerngefäß (1) eintritt, durch das Kernvolumen (4) geführt wird und über einen Ausgang (9) das Reaktorkerngefäß (1), worin die Kettenreaktion kritisch oder unterkritisch ablaufen kann, wieder verlässt und
- eine zweite Leitung für ein flüssiges Kühlmittel, die so angeordnet ist, dass das Kühlmittel aus der zweiten Leitung über einen Einlass (2) in besagtes Reaktorkerngefäß (1) eintritt, die erste Leitung (7) umspülend verläuft und das Reaktorkerngefäß (1) durch einen Auslass (5) wieder verlässt.

2. Kernreaktor gemäß Anspruch 1, wobei die erste Leitung für flüssigen Kernbrennstoff (7) mindestens eine Pumpe (30) zur Bewegung des flüssigen Kernbrennstoffs, und weiterhin mindestens eine pyrochemische Verarbeitungseinheit (28), mindestens ein Puffervolumen (27), (29), eine gekühlte Schmelzsicherung (32), mindestens ein Volumen zur Speicherung und Bereitstellung des flüssigen Kernbrennstoffs (33), und mindestens ein Ventil (31) zur Steuerung des flüssigen Kernbrennstoffs umfasst, und
- wobei die zweite Leitung für ein flüssiges Kühlmittel weiterhin mindestens eine Pumpe (24) zur Bewegung des flüssigen Kühlmittels, mindestens ein Ventil zur Steuerung des flüssigen Kühlmittels(23), und mindestens ein Volumen (26) zur Speicherung, Bereitstellung oder zum Volumenausgleich des flüssigen Kühlmittels umfasst, und wobei der Kernreaktor optional als unterkritisches System betrieben werden kann, und wobei die Anordnung des Kernreaktors weiterhin die Nutzung eines MHD-Generators ermöglicht.

3. Kernreaktor gemäß Anspruch 1 oder 2, wobei als flüssiger Kernbrennstoff flüssiges Salz verwendet wird.

4. Kernreaktor gemäß einem der vorherigen Ansprüche, wobei als flüssiger Kernbrennstoff Halogenide verwendet werden.

5. Kernreaktor gemäß einem der vorherigen Ansprüche, wobei als flüssiger Kernbrennstoff Chloride verwendet werden.

6. Kernreaktor gemäß einem der Ansprüche 1 oder 2, wobei als flüssiger Kernbrennstoff eine Metallschmelze mit Aktiniden verwendet wird.

7. Kernreaktor gemäß Anspruch 6, wobei der Metallschmelze elementare Metalle mit niedrigem Schmelzpunkt in einer Menge beigemischt sind, die die Solidustemperatur der Metallschmelze soweit unter die Betriebstemperatur absenkt, dass die Schmelze hinreichend durch Pumpen förderbar ist.

8. Kernreaktor gemäß Anspruch 7, wobei die beigemischten elementaren Metalle ausgewählt werden aus der Gruppe bestehend aus Blei, Wismut und Zinn.

9. Kernreaktor gemäß einem der vorherigen Ansprüche, wobei das flüssige Kühlmittel ein flüssiges Metall ist, bevorzugt flüssiges Blei.

10. Verfahren zur Aufbereitung eines zu- und abgeführten flüssigen Kernbrennstoffs in einem Kernreaktor, wobei der flüssige Kernbrennstoff in einer ersten Leitung (7) über einen Eingang (8) in das Reaktorkerngefäß (1) eintritt, durch das Kernvolumen (4) geführt wird und über einen Ausgang (9) das Reaktorkerngefäß (1), worin die Kettenreaktion kritisch oder unterkritisch ablaufen kann, wieder verlässt und die entstehende Wärme innerhalb des Reaktorkerngefäßes (1) über die Wandung der ersten Leitung (7) auf ein Kühlmittel, das in einer zweiten Leitung die erste Leitung umspült, übertragen wird, und wobei der flüssige Kernbrennstoff in der ersten Leitung (7) zu einer pyrochemischen Verarbeitungseinheit (28) transportiert und in besagter pyrochemischen Verarbeitungseinheit aufbereitet wird.

## Claims

1. Nuclear reactor including a primary duct (7) for continuous insertion and discharge of liquid fuel into and out of a core volume (4) in a core vessel (1), wherein said primary duct enters the core vessel (1) via an inlet (8), is lead through the core volume (4) and leaves the core vessel (1) in which the chain reaction can take place critically or sub-critically via an outlet (9) and a secondary duct for a liquid coolant arranged in such a way, that the coolant from the secondary duct enters the aforementioned core vessel (1) via an inlet (2), passing and bathing the primary duct (7) and leaving the core vessel (1) via an outlet (5).

2. Nuclear reactor according to claim 1, wherein the primary duct (7) for liquid fuel comprises at least one pump (30) for liquid fuel circulation, at least one pyrochemical processing unit (28), at least one buffer volume (27), (29), a cooled fuse plug (32), at least one storage volume for holding and providing of the liquid fuel (33), and at least one valve (31) for liquid fuel control and wherein the secondary duct for a liquid coolant comprises at least one pump (24) for circulating the liquid coolant, at least one valve for liquid coolant flux control (23) and at least one volume unit (26) for storing, providing or for volume-buffering of the liquid coolant, and wherein the nuclear reactor can be optionally operated as a sub-critical system, and wherein the design of the nuclear reactor enables MHD generator operation.

3. Nuclear reactor according to claim 1 or claim 2, wherein molten-salt is used as liquid nuclear fuel.

4. Nuclear reactor according to one of the claims above, wherein halides are used for liquid fuel.

5. Nuclear reactor according to one of the claims above, wherein chlorides are used for liquid fuel.

6. Nuclear reactor according to claim 1 or claim 2, wherein a molten metal containing actinides is used for liquid fuel.

7. Nuclear reactor according to claim 6, wherein elemental metals with low melting point are added to the molten metal in such quantities sufficiently to decrease the solidus temperature of the molten metal below the operating temperature far enough to ensure that the melt is sufficiently pumpable.

8. Nuclear reactor according to claim 7, wherein the added elemental metals are selected from a group consisting of lead, bismuth and tin.

9. Nuclear reactor according to one of the claims above, wherein the liquid coolant is a liquid metal, preferably liquid lead.

10. Method for processing an inserted and removed liquid nuclear fuel in a nuclear reactor, wherein the liquid nuclear fuel is lead in a primary duct (7) via an inlet (8) into the reactor vessel (1), lead through the core volume (4) and leaves the reactor vessel (1), in which the chain reaction can take place critically or sub-critically, via an outlet (9) and wherein the resulting heat is transferred within the reactor vessel (1) via the primary duct's(7) wall to a coolant bathing the primary duct in a secondary duct, and wherein the liquid nuclear fuel in the primary duct (7) is lead to and processed in a pyrochemical processing unit (28).

## Revendications

1. Réacteur nucléaire comprenant une première ligne (7) pour l'amenée et l'évacuation continue d'un combustible liquide dans un volume du coeur (4) dans une cuve du coeur du réacteur (1), ladite première ligne entrant dans la cuve du coeur du réacteur (1) par une entrée (8), étant guidée par le volume du coeur (4) et quittant à nouveau, par une sortie (9), la cuve du coeur du réacteur (1), dans laquelle la réaction en chaîne peut se dérouler de façon critique ou sous-critique et
- une deuxième ligne pour un réfrigérant liquide, placée de telle manière à ce que le réfrigérant entre depuis la deuxième ligne par une entrée (2) dans ladite cuve du coeur du réacteur (1), rinçe la première ligne (7) et quitte à nouveau la cuve du coeur du réacteur (1) par une sortie (5).

2. Réacteur nucléaire conformément à la revendication n°1, la première ligne pour le combustible nucléaire liquide (7), comprenant au moins une pompe (30) pour le déplacement du combustible nucléaire liquide ainsi qu'au moins une unité de traitement pyrochimique (28), au moins une zone tampon (27), (29), un fusible de sécurité refroidi (32), au moins un volume pour le stockage et la mise à disposition du combustible nucléaire liquide (33) et au moins une soupape (31) pour la régulation du combustible nucléaire liquide et
- la deuxième ligne pour un réfrigérant liquide, comprenant au moins une pompe (24) pour le déplacement du réfrigérant liquide, au moins une soupape pour la régulation du réfrigérant liquide (23) et au moins un volume (26) pour le stockage, la mise à disposition ou la compensation de volume du réfrigérant liquide, et le réacteur nucléaire pouvant être exploité éventuellement comme système sous-critique et la disposition du réacteur nucléaire permettant en outre l'utilisation d'un générateur MHD.

3. Réacteur nucléaire conformément à la revendication n°1 ou n°2, du sel liquide étant utilisé comme combustible nucléaire liquide.

4. Réacteur nucléaire conformément à l'une des revendications précédentes, des halogénures étant utilisés comme combustible nucléaire liquide.

5. Réacteur nucléaire conformément à l'une des revendications précédentes, des chlorures étant utilisés comme combustible nucléaire liquide.

6. Réacteur nucléaire conformément à l'une des revendications n°1 ou n°2, un métal en fusion avec actinides étant utilisé comme combustible nucléaire liquide.

7. Réacteur nucléaire conformément à la revendication n°6, des métaux élémentaires avec un point de fusion bas étant mélangés au métal en fusion dans une quantité qui abaisse la température de solidus du métal en fusion en dessous de la température de service pour que la masse fondue puisse être suffisamment refoulée par pompage.

8. Réacteur nucléaire conformément à la revendication n°7, les métaux élémentaires mélangés étant sélectionnés à partir du groupe composé de plomb, de bismuth et d'étain.

9. Réacteur nucléaire conformément à l'une des revendications précédentes, le liquide réfrigérant étant un métal liquide, de préférence du plomb fondu.

10. Procédé de préparation d'un combustible nucléaire liquide amené et évacué dans un réacteur nucléaire, le combustible nucléaire liquide entrant dans une première ligne (7) par une entrée (8) dans la cuve du coeur du réacteur (1), étant guidé par le volume du coeur (4) et quittant à nouveau par une sortie (9) la cuve du coeur du réacteur (1), dans laquelle la réaction en chaîne peut se dérouler de façon critique ou sous-critique et la chaleur produite étant transférée, à l'intérieur de la cuve du coeur du réacteur (1) par la paroi de la première ligne (7), à un réfrigérant qui rince la première ligne dans une deuxième ligne et le combustible nucléaire liquide dans la première ligne (7) étant transporté vers une unité de traitement pyrochimique (28) et traité dans ladite unité de traitement pyrochimique.
